# EUROPÄISCHE PATENTSCHRIFT

(11) **EP 2 951 066 B1**
(45) Veröffentlichungstag und Bekanntmachung des Hinweises auf die Patenterteilung: **22.03.2017**
(21) Anmeldenummer: 14701551.5
(22) Anmeldetag: 28.01.2014
(51) Int. Cl.: B60T 1/087, B60T 10/02, F01P 3/20

(54) **KÜHLKREISLAUF FÜR EIN KRAFTFAHRZEUG MIT EINEM HYDRODYNAMISCHEN RETARDER**
COOLING CIRCUIT FOR A MOTOR VEHICLE HAVING A HYDRODYNAMIC RETARDER
CIRCUIT DE REFROIDISSEMENT D'UN VÉHICULE AUTOMOBILE, MUNI D'UN RETARDATEUR HYDRODYNAMIQUE

(30) Priorität: 31.01.2013 DE 102013001657
(43) Veröffentlichungstag der Anmeldung: 09.12.2015
(73) Patentinhaber: MAN Truck & Bus AG, 80995 München (DE); Voith Patent GmbH, 89522 Heidenheim (DE)
(72) Erfinder: ADAMS, Werner, 74564 Crailsheim (DE); BECK, Manfred, 74599 Wallhausen-Hengstfeld (DE); GOTTSCHALL, Matthias, 78345 Moos (DE); MANDLIK, Manfred, 74594 Kressberg (DE); MENNE, Achim, 74564 Crailsheim (DE); STURM, Dietmar, 92353 Postbauer-Heng (DE); BAUER, Thomas, 90596 Schwanstetten (DE)
(86) Internationale Anmeldenummer: PCT/EP2014/051594
(87) Internationale Veröffentlichungsnummer: WO 2014/118158

(56) Entgegenhaltungen:
- WO-A1-97/33077

## Beschreibung

Die vorliegende Erfindung betrifft einen Kühlkreislauf für ein Kraftfahrzeug, in welchem ein hydrodynamischer Retarder angeordnet ist, im Einzelnen gemäß dem Oberbegriff von Anspruch 1.

Neben sogenannten Ölretardern, die mit dem Arbeitsmedium Öl betrieben werden, das in einem eigenen Arbeitsmediumkreislauf des Retarders zirkuliert wird, sind sogenannte Wasserretarder bekannt, die unmittelbar in den Kühlkreislauf eines Kraftfahrzeugs eingebunden sind, der in der Regel mit Wasser oder einem Wassergemisch als Kühlmedium betrieben wird. Demgemäß ist das Arbeitsmedium des Retarders zugleich das Kühlmedium des Kühlkreislaufs.

Während bei den erstgenannten Ölretardern ein zusätzlicher Wärmetauscher vorgesehen sein muss, um die im Bremsbetrieb des hydrodynamischen Retarders entstehende Wärme aus dem Arbeitsmedium abzuführen, beispielsweise in den Kühlkreislauf des Kraftfahrzeugs, kann bei den zweitgenannten Wasserretardern ein solcher separater Wärmetauscher entfallen, da die Wärme des hydrodynamischen Retarders im Retarder unmittelbar vom Kühlmedium aufgenommen wird und somit über den ohnehin vorgesehenen Wärmetauscher des Kühlkreislaufs (Fahrzeugkühler) abgeführt werden kann.

Beispiele für solche in den Kühlkreislauf des Kraftfahrzeugs eingebundene hydrodynamische Retarder, wie sie die vorliegende Erfindung betrifft, werden in den folgenden Druckschriften offenbart:
EP0719683A2
DE 297 07 304 U1
DE 196 16 427 A1
EP 1 251 050 B1
DE 1 530 672 A
EP 1 646 771 B1.

In der Praxis hat sich nun als nachteilig erwiesen, dass durch die Einbindung des hydrodynamischen Retarders unmittelbar in den Fahrzeugkühlkreislauf ein erhöhter durch die Kühlmediumpumpe zu überwindender Strömungswiderstand für das Kühlmedium auftreten kann. Somit wird in ungünstigen Fällen der Einsatz einer Kühlmediumpumpe mit einer vergleichsweise größeren Leistung im Vergleich zu Kühlkreisläufen ohne hydrodynamischen Retarder erforderlich. Gemäß der EP 1 646 771 B1 werden daher verschiedene Maßnahmen vorgeschlagen, um die Notwendigkeit einer leistungsstärkeren Kühlmediumpumpe, die zu einem erhöhten Kraftstoffverbrauch führen kann, zu vermeiden.

WO 97/33077 beschreibt ein Ausführungsbeispiel mit einem hydrodynamischen Retarder im Kühlkreislauf eines Kraftfahrzeugs, bei welchem durch einen Kurzschlusskreislauf, der stromabwärts des hydrodynamischen Retarders abzweigt und stromaufwärts der Kühlmediumpumpe einmündet, ein besonders kleines minimales Retarderbremsmoment eingestellt werden kann.

Aufgrund der zunehmenden Bedeutung einer möglichst geringen Leistungsaufnahme der Kühlmediumpumpe besteht trotz der bereits vorgeschlagenen Maßnahmen ein Bedarf, den Strömungswiderstand in einem Kühlkreislauf für ein Kraftfahrzeug mit einem unmittelbar eingebundenen hydrodynamischen Retarder zu reduzieren.

Der vorliegenden Erfindung liegt daher die Aufgabe zugrunde, einen Kühlkreislauf für ein Kraftfahrzeug anzugeben, der eine besonders verlustarme Einbindung des hydrodynamischen Retarders in den Kühlkreislauf ermöglicht.

Die erfindungsgemäße Aufgabe wird durch einen Kühlkreislauf für ein Kraftfahrzeug mit den Merkmalen von Anspruch 1 gelöst. In den abhängigen Ansprüchen sind vorteilhafte und besonders zweckmäßige Ausgestaltungen der Erfindung angegeben.

Der erfindungsgemäße Kühlkreislauf für ein Kraftfahrzeug weist eine Kühlmediumpumpe auf, die ein Kühlmedium im Kühlkreislauf umwälzt. Ferner ist ein hydrodynamischer Retarder vorgesehen, umfassend ein beschaufeltes Primärrad und ein beschaufeltes Sekundärrad, die gemeinsam einen mit einem Arbeitsmedium befüllbaren Arbeitsraum ausbilden. In dem Arbeitsraum kann durch Antreiben des Primärrades eine hydrodynamische Kreislaufströmung des Arbeitsmediums erzeugt werden, mittels welcher Antriebsleistung hydrodynamisch vom Primärrad auf das Sekundärrad übertragen wird, wodurch das Primärrad abgebremst wird. Das Sekundärrad kann als nicht umlaufender Stator oder als in Gegenrichtung zum Primärrad umlaufender Rotor vorgesehen sein.

Erfindungsgemäß ist das Kühlmedium des Kühlkreislaufes zugleich Arbeitsmedium des hydrodynamischen Retarders.

Der Kühlkreislauf weist einen Hauptkreis auf, in welchem die Kühlmediumpumpe positioniert ist. Ferner ist im Hauptkreis ein Antriebsmotor und/oder ein anderes Aggregat des Kraftfahrzeugs vorgesehen, der/das mittels des Kühlmediums gekühlt wird. Schließlich ist ein Wärmetauscher zur Abfuhr der vom Antriebsmotor oder dem anderen Aggregat aufgenommenen Wärme des Kühlmediums im Hauptkreis positioniert, sodass durch Antreiben der Kühlmediumpumpe, die vorteilhaft hierzu in einer Triebverbindung mit dem Antriebsmotor steht oder auch durch einen anderen Motor angetrieben werden kann, das Kühlmedium im Hauptkreis umgewälzt werden kann, um zunächst die Wärme in dem Antriebsmotor und/oder dem anderen Aggregat aufzunehmen und anschließend in dem Wärmetauscher beispielsweise an die Umgebung oder an einen Sekundärkreislauf abzugeben.

Erfindungsgemäß ist der hydrodynamische Retarder in einem Nebenzweig des Kühlkreislaufes positioniert. Der Nebenzweig umfasst einen Vorlauf, der aus dem Hauptkreis an einer Abzweigstelle abzweigt und im hydrodynamischen Retarder mündet, sowie einen Rücklauf, der vom hydrodynamischen Retarder ausgeht und an einer Einmündungsstelle im Hauptkreis mündet. Somit kann Kühlmedium als Arbeitsmedium des hydrodynamischen Retarders vom Hauptkreis abgezweigt werden, über den Vorlauf in den Arbeitsraum des hydrodynamischen Retarders geleitet werden und in der Regel nach Durchlaufen der hydrodynamischen Kreislaufströmung aus dem Arbeitsraum des hydrodynamischen Retarders über den Rücklauf wieder dem Hauptkreis zugeführt werden.

Erfindungsgemäß mündet der Rücklauf in Strömungsrichtung des Kühlmediums im Hauptkreis gesehen stromaufwärts der Abzweigstelle des Vorlaufes oder an der Abzweigstelle des Vorlaufes im Hauptkreis. Das bedeutet, es ist nicht, wie bisher üblich, eine Mündung des Rücklaufes stromabwärts der Abzweigstelle des Vorlaufes vorgesehen, sondern allenfalls im Bereich eines gemeinsamen Knotens der Abzweigstelle und der Mündungsstelle im Hauptkreis. Wenn der Rücklauf in Strömungsrichtung des Kühlmediums im Hauptkreis gesehen stromaufwärts der Abzweigstelle des Vorlaufes mündet, so sind jedoch die Mündung des Rücklaufes und die Abzweigstelle des Vorlaufes auf einer gemeinsamen Seite der Kühlmediumpumpe im Hauptkreis positioniert, das heißt entweder gemeinsam stromabwärts der Kühlmediumpumpe, das heißt auf deren Druckseite, oder gemeinsam stromaufwärts der Kühlmediumpumpe, das heißt auf deren Saugseite.

Unter einem solchen gemeinsamen Knoten beziehungsweise einer Mündung des Rücklaufes an der Abzweigstelle des Vorlaufes sind alle solche Ausgestaltungen zu verstehen, bei denen die Mündung im selben axialen Abschnitt des Hauptkreises wie die Abzweigstelle vorgesehen ist. In der Regel wird dabei der Strömungsquerschnitt der Mündung und der Strömungsquerschnitt der Abzweigung nicht zusammenfallen, sondern beispielsweise über dem Umfang des Strömungsquerschnittes des Hauptkreises versetzt zueinander vorgesehen sein. Auch ist es möglich, im Hauptkreis im Bereich der Mündungsstelle und der Abzweigstelle einen Sammelquerschnitt vorzusehen, sodass beispielsweise der Vorlauf in Strömungsrichtung des Kühlmediums im Hauptkreis gesehen axial neben dem Rücklauf abzweigt, oberhalb von diesem oder unterhalb von diesem.

Gemäß einer vorteilhaften Ausgestaltung der Erfindung ist vorgesehen, dass die Abzweigstelle des Vorlaufes im Hauptkreis frei von einem die Strömung in den Vorlauf umlenkenden Ventil, insbesondere frei von jeglichem Ventil ist. Zusätzlich oder alternativ kann auch die Einmündungsstelle des Rücklaufs im Hauptkreis frei von einem die Strömung im Rücklauf einstellenden Ventil, insbesondere frei von jeglichem Ventil sein.

Besonders günstig ist es, wenn zumindest im Bereich der Einmündungsstelle und der Abzweigstelle der Hauptkreis durch einen Hauptkanal, der Vorlauf durch einen Vorlaufkanal und der Rücklauf durch einen Rücklaufkanal gebildet werden, wobei die verschiedenen Kanäle beispielsweise in einem gemeinsamen Bauteil, insbesondere Gussbauteil, integriert sein können, und ein erster axialer Abschnitt des Hauptkanals, der in Strömungsrichtung des Kühlmediums im Hauptkreis gesehen unmittelbar stromaufwärts der Abzweigstelle positioniert ist, parallel zur Axialrichtung eines axialen Abschnitts des Vorlaufkanals, der sich unmittelbar an die Abzweigstelle anschließt, verläuft, insbesondere mit diesem fluchtet. Eine Weiterbildung dieser Ausgestaltung sieht vor, dass ein zweiter axialer Abschnitt des Hauptkanals, der in Strömungsrichtung des Kühlmediums im Hauptkreis gesehen unmittelbar stromabwärts der Abzweigstelle positioniert ist, den axialen Abschnitt des Vorlaufkanals in Umfangsrichtung umschließt oder von diesem in Umfangsrichtung umschlossen wird.

Eine Ausführungsform sieht vor, dass ein zweiter axialer Abschnitt des Hauptkanals, der in Strömungsrichtung des Kühlmediums im Hauptkreis gesehen unmittelbar stromabwärts der Abzweigstelle positioniert ist, parallel zu Axialrichtung eines axialen Abschnitts des Rücklaufkanals, der sich unmittelbar an die Einmündungsstelle anschließt, verläuft, insbesondere mit diesem fluchtet.

Eine weitere vorteilhafte erfindungsgemäße Ausgestaltung sieht vor, dass, wie zuvor dargestellt, zumindest im Bereich der Einmündungsstelle und der Abzweigstelle der Hauptkreis durch einen Hauptkanal, der Vorlauf durch einen Vorlaufkanal und der Rücklauf durch einen Rücklaufkanal gebildet werden und nun abweichend ein erster axialer Abschnitt des Hauptkanals, der in Strömungsrichtung des Kühlmediums im Hauptkreis gesehen unmittelbar stromaufwärts der Abzweigstelle positioniert ist, parallel zur Axialrichtung eines zweiten axialen Abschnitts des Hauptkanals, der in Strömungsrichtung des Kühlmediums im Hauptkreis gesehen unmittelbar stromabwärts der Abzweigstelle positioniert ist, verläuft, insbesondere mit diesem fluchtet.

Eine weitere vorteilhafte Ausführungsform ergibt sich, wenn ein axialer Abschnitt des Vorlaufkanals, der sich unmittelbar an die Abzweigstelle anschließt, parallel zur Axialrichtung eines axialen Abschnitts des Rücklaufkanals, der sich unmittelbar an die Einmündungsstelle anschließt, verläuft, insbesondere mit diesem fluchtet. Eine Weiterbildung sieht vor, dass der axiale Abschnitt des Rücklaufkanals in Axialrichtung versetzt zu dem axialen Abschnitt des Vorlaufkanals ist, insbesondere unterhalb oder oberhalb von diesem positioniert ist.

Der erste axiale Abschnitt und der zweite axiale Abschnitt des Hauptkanals können sich unmittelbar aneinander anschließen und einen linearen querschnittsgleichen Strömungskanal ausbilden, insbesondere mit kreisrundem oder elliptischem Querschnitt. Bei dieser Ausgestaltung zweigt somit der Vorlauf winklig oder senkrecht aus einem rohrförmigen Kanal ab. Auch der Rücklauf kann entsprechend in diesem Strömungskanal einmünden, stromaufwärts der Abzweigstelle oder im Bereich der Abzweigstelle beziehungsweise an der Abzweigstelle.

Gemäß einer vorteilhaften Ausführungsform weist der Vorlauf einen kleineren Strömungsquerschnitt als der Hauptkreis auf, zumindest bezogen auf den Strömungsquerschnitt des Hauptkreises im Bereich der Abzweigstelle. Auch der Rücklauf kann zusätzlich oder alternativ einen kleineren Strömungsquerschnitt als der Hauptkreis aufweisen, insbesondere bezogen auf den Strömungsquerschnitt des Hauptkreises an der Einmündungsstelle. Alternativ kann der Strömungsquerschnitt des Vorlaufes und/oder des Rücklaufes und insbesondere des gesamten Nebenzweigs auch größer als der Strömungsquerschnitt des Hauptkreises zumindest im Bereich der Abzweigstelle sein.

Eine Ausführungsform sieht vor, dass die Abzweigstelle und die Einmündungsstelle in Strömungsrichtung des Kühlmediums im Hauptkreis hinter der Kühlmediumpumpe und somit auf deren Druckseite positioniert sind. Dabei kann die Strecke im Hauptkreis zwischen der Kühlmediumpumpe und der Abzweigstelle sowie der Einmündung frei von einem strömungsregelnden Organ und/oder einem zu kühlenden Aggregat beziehungsweise dem Antriebsmotor sein.

Eine Ausführungsform sieht vor, dass die Abzweigstelle und die Einmündungsstelle in Strömungsrichtung des Kühlmediums im Hauptkreis vor dem Antriebsmotor oder dem anderen durch das Kühlmedium gekühlte Aggregat positioniert sind. Auch hier kann vorgesehen sein, dass zwischen der Abzweigstelle beziehungsweise der Einmündungsstelle und dem Antriebsmotor beziehungsweise dem anderen Aggregat kein strömungsregelndes Ventil und/oder ein anderes zu kühlendes Aggregat vorgesehen ist.

Gemäß einer beispielhaften Ausführungsform mündet der Rücklauf in einem Rohrstutzen in dem Hauptkreis, wobei das Mündungsende des Rohrstutzens in die Kühlmediumströmung im Hauptkreis hineinragt. Somit ist die Mündungsstelle nicht unmittelbar am äußeren Umfang des Strömungsquerschnitts des Hauptkreises vorgesehen, sondern weiter in Richtung der Mitte des Strömungsquerschnittes des Hauptkreises. Hierdurch kann, wie später anhand eines Ausführungsbeispiels erläutert wird, das aus dem Rücklauf austretende Kühlmedium vollständig oder zumindest weitgehend über den Einlassquerschnitt des Vorlaufes hinweg geleitet werden.

Im Nebenzweig des Kühlkreislaufes mit dem hydrodynamischen Retarder kann ein Bypass zur Umgehung des hydrodynamischen Retarders vorgesehen sein, der aus dem Vorlauf abzweigt und in den Rücklauf einmündet. Der Bypass und insbesondere die Abzweigstelle und/oder die Einmündungsstelle des Bypasses kann/können frei von strömungsregelnden Ventilen oder jeglichen Ventilen sein.

Im Vorlauf kann ein Abschaltventil zur wahlweisen Freigabe oder Absperrung des Strömungsquerschnittes für das Kühlmedium zum hydrodynamischen Retarder vorgesehen sein. Ein solches Abschaltventil kann insbesondere als schwarz-weiß schaltendes Ventil ausgeführt sein, das heißt keine Zwischenstellungen zur teilweisen Absperrung des Strömungsquerschnittes aufweisen.

Im Rücklauf kann ein Regelventil zur variablen Einstellung des Strömungsquerschnittes für das Kühlmedium aus dem Retarder vorgesehen sein. Dieses Regelventil weist vorteilhaft Zwischenstellungen zur teilweisen Absperrung des Strömungsquerschnittes sowie eine Stellung zur vollständigen Absperrung des Strömungsquerschnittes und eine Stellung zur vollständigen Freigabe des Strömungsquerschnittes auf und ist beispielsweise als stetigregelndes Ventil ausgeführt.

Die Erfindung soll nachfolgend anhand verschiedener Ausführungsbeispiele exemplarisch beschrieben werden.

Es zeigen:
- Figur 1: ein erstes Ausführungsbeispiel eines erfindungsgemäßen Kühlkreislaufes mit einem über eine Knotenstelle angeschlossenen hydrodynamischen Retarder;
- Figur 2: eine Ausführungsform der Erfindung, bei welcher der Rücklauf stromaufwärts der Abzweigstelle des Vorlaufes am Hauptkreis angeschlossen ist;
- Figur 3: ein Ausführungsbeispiel für eine Knotenstelle zum Anschluss des Nebenzweigs mit dem hydrodynamischen Retarder am Hauptkreis;
- Figur 4: ein weiteres Ausführungsbeispiel zur Gestaltung der Knotenstelle;
- Figur 5: eine Ausgestaltung der Knotenstelle, sodass der Hauptzweig im Bereich der Knotenstelle linear ausgeführt werden kann;
- Figur 6: eine mögliche Positionierung des Vorlaufs in Axialrichtung parallel, jedoch versetzt zum Rücklauf;
- Figur 7: ein Beispiel einer Knotenstelle mit nicht senkrechtem Verlauf des Vorlaufs und Rücklaufs zum Hauptzweig;
- Figur 8: ein Ausführungsbeispiel, bei welchem der Vorlauf konzentrisch vom Strömungskanal des Hauptzweigs umschlossen wird;
- Figur 9: ein Ausführungsbeispiel, bei welchem der Vorlauf und der Rücklauf an dem Spiralkanal der Kühlmediumpumpe auf deren Druckseite angeschlossen sind;
- Figur 10: ein Ausführungsbeispiel mit verschiedenen Strömungsquerschnitten des Hauptkanals an der Abzweigstelle und der Einmündungsstelle.

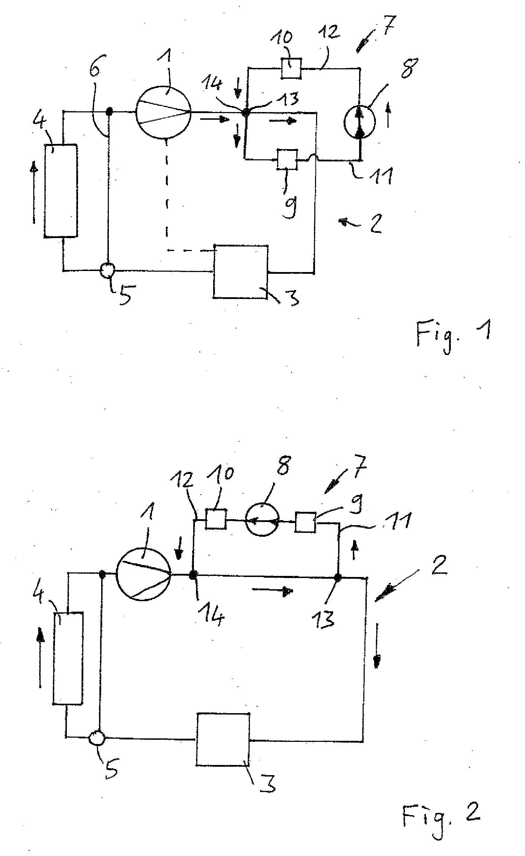

In der Figur 1 ist schematisch ein Kühlkreislauf eines Kraftfahrzeugs dargestellt, in welchem eine Kühlmediumpumpe 1 ein Kühlmedium durch einen Hauptkreis 2 pumpt, in dem neben der Kühlmediumpumpe 1 ein Antriebsmotor 3 und ein Wärmetauscher 4 vorgesehen sind. Wie durch die gestrichelte Linie angedeutet ist, kann die Kühlmediumpumpe 1 beispielweise mittels des Antriebsmotors 3 angetrieben werden, der ferner hier nicht näher dargestellte Antriebsräder des Kraftfahrzeugs antreibt.

Das im Antriebsmotor 3 erwärmte Kühlmedium wird im Wärmetauscher 4 abgekühlt. Im gezeigten Ausführungsbeispiel ist ein über ein Thermostatventil 5 ansteuerbarer Wärmetauscherbypass 6 im Hauptkreis 2 des Kühlkreislaufs vorgesehen.

In einem Nebenzweig 7 ist ein hydrodynamischer Retarder 8 positioniert, der mit dem Kühlmedium als Arbeitsmedium betrieben wird. In Strömungsrichtung des Kühlmediums im Nebenzweig 7 ist vor (stromaufwärts) des hydrodynamischen Retarders 8 ein Abschaltventil 9 vorgesehen, mittels welchem der Strömungsquerschnitt in einem Vorlauf 11, der zum hydrodynamischen Retarder 8 führt, wahlweise abgesperrt oder geöffnet werden kann. In Strömungsrichtung des Kühlmediums im Nebenzweig 7 hinter (stromabwärts) des hydrodynamischen Retarders 8 ist ein Regelventil 10 vorgesehen, mittels welchem der Strömungsquerschnitt für Kühlmedium aus dem hydrodynamischen Retarder 8 und somit im Rücklauf 12 variabel eingestellt werden kann, um das Bremsmoment des hydrodynamischen Retarders 8 zu variieren.

Bei dem in der Figur 1 gezeigten Ausführungsbeispiel mündet der Rücklauf 12 an jener Stelle im Hauptkreis 2, an welcher auch die Abzweigstelle 13 des Vorlaufes 11 vorgesehen ist. Somit kann ein Bypass im Hauptkreis 2 zum hydrodynamischen Retarder 8 vermieden werden, der die strömungsführende axiale Länge des Hauptkreises 2 verlängern würde und damit zu einem vergleichsweise größeren Strömungsverlust führen würde.

Die Ausführungsform gemäß der Figur 2 entspricht weitgehend jener der Figur 1 und sich entsprechende Bauteile sind mit denselben Bezugszeichen beziffert. Abweichend mündet jedoch hier der Rücklauf 12 in Strömungsrichtung des Kühlmediums im Hauptkreis 2 gesehen stromaufwärts der Abzweigstelle 13 des Vorlaufes 11. Bei der hier beispielhaft dargestellten Positionierung der Einmündungsstelle 14 und der Abzweigstelle 13 auf der Druckseite der Kühlmediumpumpe 1 ist demnach die Einmündungsstelle 14 des Rücklaufes 12 dichter an der Kühlmediumpumpe 1 positioniert als die Abzweigstelle 13. Bei der Ausführungsform gemäß der Figur 1 hingegen waren die Einmündungsstelle 14 und die Abzweigstelle 13 in etwa oder genau gleich weit von der Kühlmediumpumpe 1 entfernt.

Auch bei der Ausführungsform gemäß der Figur 2 ist kein Bypass im Hauptkreis 2 zum hydrodynamischen Retarder 8 vorgesehen, durch welchen ein nicht durch den hydrodynamischen Retarder 8 strömender Anteil des Kühlmediums am hydrodynamischen Retarder 8 vorbeigeleitet wird.

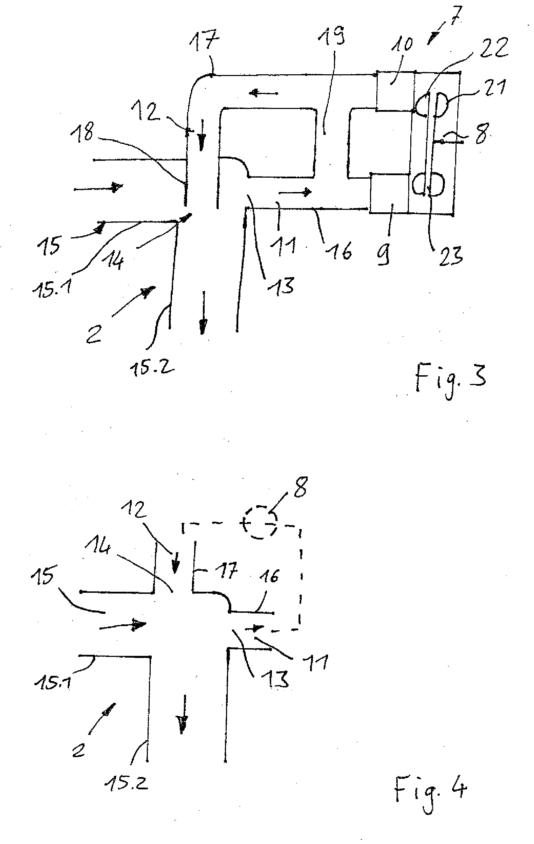

Anhand der Figuren 3 bis 8 sollen nun beispielhaft mögliche Ausgestaltungen von Knotenstellen erläutert werden, das heißt Ausführungsformen, bei welchen die Einmündungsstelle 14 an der Abzweigstelle 13 im Hauptkreis 2 positioniert ist. Die dargestellten Ausführungsformen könnten jedoch auch abweichend mit einer Positionierung der Einmündungsstelle 14 stromaufwärts der Abzweigstelle 13 im Hauptkreis 2 ausgeführt werden.

Bei allen im Folgenden diskutierten Ausgestaltungen wird der Hauptkreis 2 im Bereich der Abzweigstelle 13 und der Einmündungsstelle 14 durch einen Hauptkanal 15 gebildet, der einen ersten axialen Abschnitt 15.1 in Strömungsrichtung des Kühlmediums im Hauptkreis 2 unmittelbar stromaufwärts der Abzweigstelle 13 und einen zweiten axialen Abschnitt 15.2 in Strömungsrichtung des Kühlmediums im Hauptkreis 2 unmittelbar stromabwärts der Abzweigstelle 13 aufweist. Der Vorlauf 11 wird durch einen Vorlaufkanal 16 gebildet und der Rücklauf 12 wird durch einen Rücklaufkanal 17 gebildet.

Gemäß der Figur 3 ist die Axialrichtung des Vorlaufkanals 16 des Vorlaufes 11 parallel, insbesondere fluchtend zur Axialrichtung des ersten axialen Abschnitts 15.1 des Hauptkanals 15 positioniert, und die Axialrichtung des Rücklaufkanals 17 des Rücklaufes 12 ist parallel, insbesondere fluchtend zur Axialrichtung des zweiten axialen Abschnittes 15.2 des Hauptkanals 15 ausgerichtet, jeweils bezogen auf den axialen Abschnitt des Vorlaufkanals 16 beziehungsweise des Rücklaufkanals 17, der sich unmittelbar an die Abzweigstelle 13 beziehungsweise die Einmündungsstelle 14 anschließt.

Bei dem in der Figur 3 dargestellten Ausführungsbeispiel weist der Rücklaufkanal 17 ferner einen Rohrstutzen 18 auf, dessen Mündungsende in die Kühlmediumströmung im Hauptkreis 2, das heißt im ersten axialen Abschnitt 15.1 des Hauptkanals 15 hineinragt. Der Rohrstutzen 18 kann dabei derart weit in den ersten axialen Abschnitt 15.1 hineinragen, dass er die Strömungsfläche der Abzweigstelle 13 teilweise oder vollständig überdeckt, um so zu verhindern, dass das aus dem Rücklauf 12 ausströmende Kühlmedium sofort wieder in den Vorlauf 11 einströmt und stattdessen weiter durch den Hauptkreis 2 strömt, nämlich in den zweiten axialen Abschnitt 15.2 des Hauptkanals 15.

Bei der in der Figur 3 dargestellten Ausführungsform ist beispielhaft ferner ein Bypass 19 im Nebenzweig 7 vorgesehen, durch welchen jenes Kühlmedium des Nebenzweigs 7 strömen kann, das nicht durch den hydrodynamischen Retarder 8 geleitet wird.

In der Figur 3 ist der Aufbau des Retarders 8 mit einem Primärrad 21 und einem Sekundärrad 22 schematisch dargestellt. Das Primärrad 21 und das Sekundärrad 22 stehen sich in Axialrichtung gegenüber und schließen in ihrem beschaufelten Bereich einen Arbeitsraum 23 zwischen sich ein.

Die Ausführungsform gemäß der Figur 4 entspricht weitgehend jener der Figur 3. Jedoch ist hier kein Bypass im Nebenzweig 7 vorgesehen und ebenso wenig ein Rohrstutzen 18, der in den Hauptkanal 15 hineinragt.

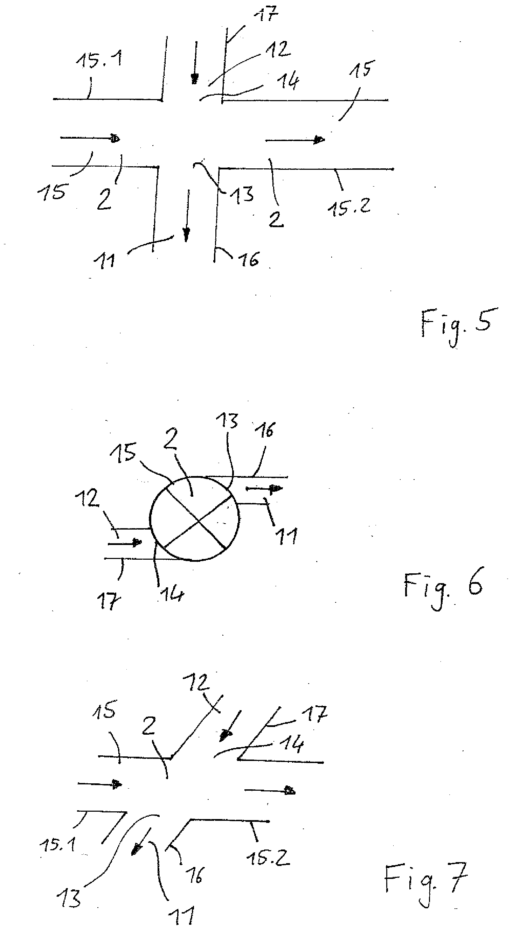

Gemäß der Ausgestaltung, die in der Figur 5 dargestellt ist, ist der erste axiale Abschnitt 15.1 des Hauptkanals 15 achsparallel, insbesondere fluchtend zum zweiten axialen Abschnitt 15.2. Ferner ist der Vorlaufkanal 16 des Vorlaufs 11 achsparallel oder fluchtend zum Rücklaufkanal 17 des Rücklaufes 12.

In der Figur 6 ist eine Möglichkeit dargestellt, um den Vorlaufkanal 16 parallel, jedoch versetzt zum Rücklaufkanal 17 zu positionieren. Hierdurch wird verhindert, dass aus dem Rücklauf 12 in den Hauptkanal 15 einströmendes Kühlmedium sofort wieder in den Vorlauf 11 strömt.

Die Ausgestaltung der Figur 7 entspricht weitgehend jener der Figur 5, jedoch stehen der Vorlaufkanal 16 und der Rücklaufkanal 17 nicht senkrecht, sondern winklig auf dem Hauptkanal 15.

In den Figuren 5 und 7 ist angedeutet, dass die Strömungsquerschnitte des Vorlaufkanals 16 und insbesondere des gesamten Vorlaufes 11 und/oder der Strömungsquerschnitt des Rücklaufkanals 17 und insbesondere des gesamten Rücklaufes 12 zumindest im Wesentlichen dem Strömungsquerschnitt des Hauptkanals 15 entsprechen können. Bei den Ausführungsformen gemäß der Figuren 3, 4 und 6 hingegen ist angedeutet, dass diese einen vergleichsweise kleineren Strömungsquerschnitt aufweisen. Dies kann jedoch in den jeweils gezeigten Ausgestaltungen auch anders vorgesehen sein.

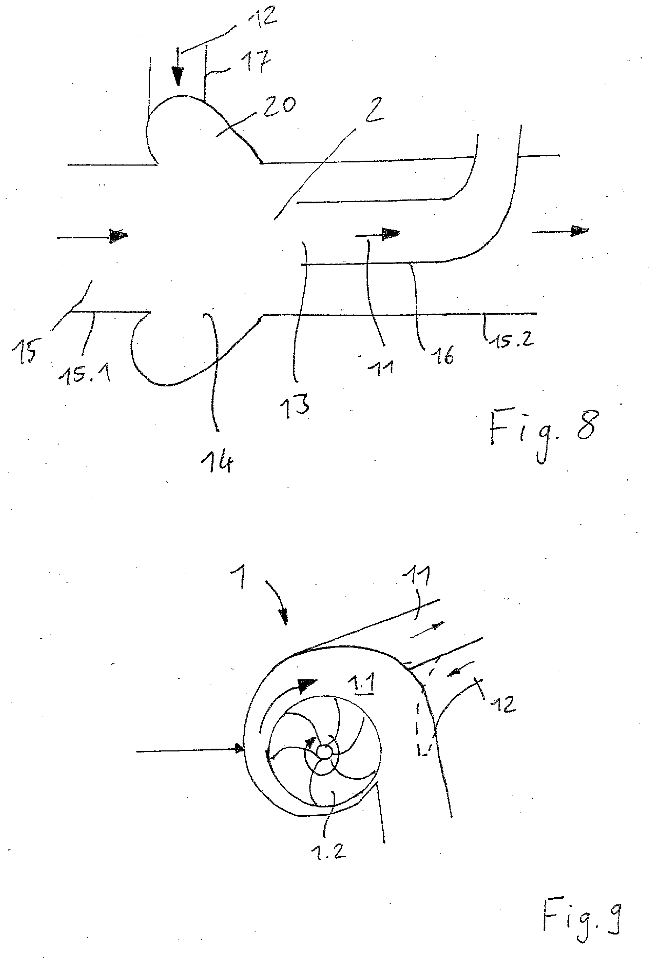

In der Figur 8 ist ein Ausführungsbeispiel dargestellt, bei welchem der Vorlaufkanal 16 in Umfangsrichtung vom zweiten axialen Abschnitt 15.2 des Hauptkanals 15 umschlossen wird und der Rücklaufkanal 17 des Rücklaufes 12 in einem Ringkanal 20 am Hauptkanal 15 mündet.

Gemäß der Figur 9 weist die Kühlmediumpumpe 1 einen Spiralkanal 1.1 auf, in welchen das Pumpenlaufrad 1.2 das Kühlmedium fördert. Über den Spiralkanal 1.1 verlässt das Kühlmedium die Kühlmediumpumpe 1. Sowohl der Vorlauf 11 als auch der Rücklauf 12 sind an dem Spiralkanal 1.1 angeschlossen, das heißt der Vorlauf 11 zweigt von diesem ab und der Rücklauf 12 mündet in diesem ein, und zwar unmittelbar benachbart zueinander.

Der Strömungsquerschnitt des Spiralkanals 1.1 nimmt mit zunehmender Lauflänge des Spiralkanals 1.1, das heißt mit zunehmender Länge des Spiralkanals 1.1 in Strömungsrichtung des Arbeitsmediums, zu, da zunehmend mehr Kühlmedium, das über dem Umfang aus dem Pumpenlaufrad 1.2 austritt, gesammelt wird.

Wie durch die gestrichelte Linie angedeutet ist, kann die Mündung des Rücklaufs 12 eine Düse für das aus dem hydrodynamischen Retarder (in der Figur 9 nicht gezeigt) austretende Kühlmedium aufweisen, sodass das durch den Spiralkanal 1.1 strömende Kühlmedium nach Art einer Wasserstrahlpumpe mitgerissen wird. Der hydrodynamische Retarder übt im Bremsbetrieb nämlich eine erhebliche Pumpwirkung auf das Kühlmedium aus, sodass eine entsprechende Förderwirkung an der Düse entsteht.

Der Gedanke des Ausbildens einer Düse am Ende des Rücklaufes des hydrodynamischen Retarders kann auch unabhängig von der Positionierung des Rücklaufes im Kühlkreislauf auch hinsichtlich seiner relativen Lage zum Vorlauf ausgeführt werden.

Abweichend von der Darstellung in der Figur 9 könnte ferner der Rücklauf 12 in Strömungsrichtung des Kühlmediums durch den Spiralkanal 1.1 vor dem Vorlauf 11 im Spiralkanal 1.1 münden, gegebenenfalls in Form einer Düse, die teilweise oder vollständig über den Einströmquerschnitt des Vorlaufes 11 hinwegreicht.

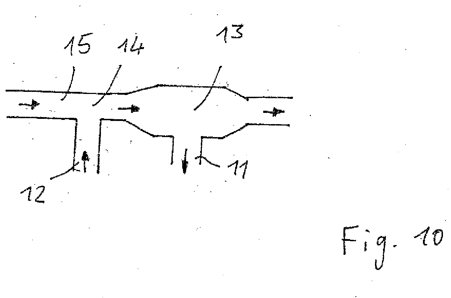

Gemäß der Figur 10 weist der Hauptkanal 15 an der Einmündungsstelle 14 des Rücklaufes 12 einen kleineren Strömungsquerschnitt als an der Abzweigstelle 13 des Vorlaufes 11 auf. Hierdurch ist der dynamische Druck im Hauptkanal 15 an der Abzweigstelle 13 aufgrund der geringeren Strömungsgeschwindigkeit des Kühlmediums kleiner als an der Einmündungsstelle 14, wodurch der statische Druck entsprechend größer ist. Dies begünstigt eine Durchströmung des Nebenzweigs mit dem hydrodynamischen Retarder (in der Figur 10 nicht im Einzelnen dargestellt).

## Patentansprüche

1. Kühlkreislauf für ein Kraftfahrzeug
1.1 mit einer Kühlmediumpumpe (1), die ein Kühlmedium im Kühlkreislauf umwälzt;
1.2 mit einem hydrodynamischen Retarder (8), umfassend ein beschaufeltes Primärrad (21) und ein beschaufeltes Sekundärrad (22), die gemeinsam einen mit einem Arbeitsmedium befüllbaren Arbeitsraum (23) ausbilden, wobei das Arbeitsmedium das Kühlmedium ist; und
1.3 der Kühlkreislauf einen Hauptkreis (2) aufweist, in welchem die Kühlmediumpumpe (1) und ein Antriebsmotor (3) des Kraftfahrzeugs oder ein anderes Aggregat zur Kühlung mittels des Kühlmediums, sowie ein Wärmetauscher (4) zur Abfuhr der vom Antriebsmotor (3) oder dem anderen Aggregat aufgenommenen Wärme des Kühlmediums positioniert sind; wobei
1.4 die Kühlmediumpumpe (1) das Kühlmedium im Hauptkreis (2) umwälzt; und
1.5 der hydrodynamische Retarder (8) in einem Nebenzweig (7) des Kühlkreislaufes positioniert ist, umfassend einen Vorlauf (11), der aus dem Hauptkreis (2) an einer Abzweigstelle (13) abzweigt und im hydrodynamischen Retarder (8) mündet, und einen Rücklauf (12), der vom hydrodynamischen Retarder (8) ausgeht und an einer Einmündungsstelle (14) im Hauptkreis (2) mündet;
**dadurch gekennzeichnet, dass**
1.6 der Rücklauf (12) in Strömungsrichtung des Kühlmediums im Hauptkreis (2) gesehen stromaufwärts der Abzweigstelle (13) des Vorlaufes (11), jedoch auf derselben Seite der Kühlmediumpumpe (1) mündet, oder an der Abzweigstelle (13) des Vorlaufes (11) im Hauptkreis (2) mündet.

2. Kühlkreislauf gemäß Anspruch 1, **dadurch gekennzeichnet, dass** die Abzweigstelle (13) des Vorlaufes (11) im Hauptkreis (2) frei von einem die Strömung in den Vorlauf (11) umlenkenden Ventil, insbesondere frei von jeglichem Ventil ist.

3. Kühlkreislauf gemäß einem der Ansprüche 1 oder 2, **dadurch gekennzeichnet, dass** die Einmündungsstelle (14) des Rücklaufes (12) im Hauptkreis (2) frei von einem die Strömung im Rücklauf (12) einstellenden Ventil, insbesondere frei von jeglichem Ventil ist.

4. Kühlkreislauf gemäß einem der Ansprüche 1 bis 3, **dadurch gekennzeichnet, dass** zumindest im Bereich der Einmündungsstelle (14) und der Abzweigstelle (13) der Hauptkreis (2) durch einen Hauptkanal (15), der Vorlauf (11) durch einen Vorlaufkanal (16) und der Rücklauf (12) durch einen Rücklaufkanal (17) gebildet werden und ein erster axialer Abschnitt (15.1) des Hauptkanals (15), der in Strömungsrichtung des Kühlmediums im Hauptkreis (2) gesehen unmittelbar stromaufwärts der Abzweigstelle (13) positioniert ist, parallel zur Axialrichtung eines axialen Abschnittes des Vorlaufkanals (16), der sich unmittelbar an die Abzweigstelle (13) anschließt, verläuft, insbesondere mit diesem fluchtet.

5. Kühlkreislauf gemäß Anspruch 4, **dadurch gekennzeichnet, dass** ein zweiter axialer Abschnitt (15.2) des Hauptkanals (15), der in Strömungsrichtung des Kühlmediums im Hauptkreis (2) gesehen unmittelbar stromabwärts der Abzweigstelle (13) positioniert ist, den axialen Abschnitt des Vorlaufkanals (16) in Umfangsrichtung umschließt oder von diesem in Umfangsrichtung umschlossen wird.

6. Kühlkreislauf gemäß Anspruch 4, **dadurch gekennzeichnet, dass** ein zweiter axialer Abschnitt (15.2) des Hauptkanals (15), der in Strömungsrichtung des Kühlmediums im Hauptkreis (2) gesehen unmittelbar stromabwärts der Abzweigstelle (13) positioniert ist, parallel zur Axialrichtung eines axialen Abschnitts des Rücklaufkanals (17), der sich unmittelbar an die Einmündungsstelle (14) anschließt, verläuft, insbesondere mit diesem fluchtet.

7. Kühlkreislauf gemäß einem der Ansprüche 1 bis 3, **dadurch gekennzeichnet, dass** zumindest im Bereich der Einmündungsstelle (13) und der Abzweigstelle (14) der Hauptkreis (2) durch einen Hauptkanal (15), der Vorlauf (11) durch einen Vorlaufkanal (16) und der Rücklauf (12) durch einen Rücklaufkanal (17) gebildet werden und ein erster axialer Abschnitt (15.1) des Hauptkanals (15), der in Strömungsrichtung des Kühlmediums im Hauptkreis (2) gesehen unmittelbar stromaufwärts der Abzweigstelle (13) positioniert ist, parallel zur Axialrichtung eines zweiten axialen Abschnitts (15.2) des Hauptkanals (15), der in Strömungsrichtung des Kühlmediums im Hauptkreis (2) gesehen unmittelbar stromabwärts der Abzweigstelle (13) positioniert ist, verläuft, insbesondere mit diesem fluchtet.

8. Kühlkreislauf gemäß einem der Ansprüche 1 bis 3 und insbesondere gemäß Anspruch 7, **dadurch gekennzeichnet, dass** ein axialer Abschnitt des Vorlaufkanals (16), der sich unmittelbar an die Abzweigstelle (13) anschließt, parallel zur Axialrichtung eines axialen Abschnitts des Rücklaufkanals (17), der sich unmittelbar an die Einmündungsstelle (14) anschließt, verläuft, insbesondere mit diesem fluchtet.

9. Kühlkreislauf gemäß Anspruch 8, **dadurch gekennzeichnet, dass** der axiale Abschnitt des Rücklaufkanals (17) in Axialrichtung versetzt zu dem axialen Abschnitt des Vorlaufkanals (16) ist, insbesondere unterhalb oder oberhalb von diesem positioniert ist.

10. Kühlkreislauf gemäß einem der Ansprüche 7 bis 9, **dadurch gekennzeichnet, dass** der erste axiale Abschnitt (15.1) und der zweite axiale Abschnitt (15.2) des Hauptkanals (15) sich unmittelbar aneinander anschließend einen linearen querschnittsgleichen Strömungskanal ausbilden, insbesondere mit kreisrundem oder elliptischem Querschnitt.

11. Kühlkreislauf gemäß einem der Ansprüche 1 bis 10, **dadurch gekennzeichnet, dass** der Vorlauf (11) und/oder der Rücklauf (12) einen kleineren Strömungsquerschnitt aufweisen als der Hauptkreis (2).

12. Kühlkreislauf gemäß einem der Ansprüche 1 bis 11, **dadurch gekennzeichnet, dass** die Abzweigstelle (13) und die Einmündungsstelle (14) in Strömungsrichtung des Kühlmediums im Hauptkreis (2) hinter der Kühlmediumpumpe (1) positioniert sind.

13. Kühlkreislauf gemäß einem der Ansprüche 1 bis 12, **dadurch gekennzeichnet, dass** die Abzweigstelle (13) und die Einmündungsstelle (14) in Strömungsrichtung des Kühlmediums im Hauptkreis (2) vor dem Antriebsmotor (3) oder dem anderen Aggregat positioniert sind.

14. Kühlkreislauf gemäß einem der Ansprüche 1 bis 13, **dadurch gekennzeichnet, dass** der Rücklauf (12) in einem Rohrstutzen (18) in den Hauptkreis (2) mündet, dessen Mündungsende in die Kühlmediumströmung im Hauptkreis (2) hineinragt.

15. Kühlkreislauf gemäß einem der Ansprüche 1 bis 14, **dadurch gekennzeichnet, dass** im Nebenzweig (7) des Kühlkreislaufes mit dem hydrodynamischen Retarder (8) ein Bypass (19) zur Umgehung des hydrodynamischen Retarders (8) vorgesehen ist, der aus dem Vorlauf (11) abzweigt und in den Rücklauf (12) einmündet und insbesondere frei von strömungsregelnden Ventilen oder jeglichen Ventilen ist.

16. Kühlkreislauf gemäß einem der Ansprüche 1 bis 15, **dadurch gekennzeichnet, dass** im Vorlauf (11) ein Abschaltventil (9) zur wahlweisen Freigabe oder Absperrung des Strömungsquerschnittes für Kühlmedium zum hydrodynamischen Retarder (8) vorgesehen ist.

17. Kühlkreislauf gemäß einem der Ansprüche 1 bis 16, **dadurch gekennzeichnet, dass** im Rücklauf (12) ein Regelventil (10) zur variablen Einstellung des Strömungsquerschnittes für Kühlmedium aus dem hydrodynamischen Retarder (8) vorgesehen ist.

18. Kühlkreislauf gemäß einem der Ansprüche 1 bis 17, **dadurch gekennzeichnet, dass** der Rücklauf (12) und der Vorlauf (11) gemeinsam an einem Spiralkanal (1.1) der Kühlmediumpumpe (1) angeschlossen sind.

19. Kühlkreislauf gemäß einem der Ansprüche 1 bis 16, **dadurch gekennzeichnet, dass** der Hauptkreis (2) an der Abzweigstelle (13) des Vorlaufes (11) einen größeren Strömungsquerschnitt als an der Einmündungsstelle (14) des Rücklaufes (12) aufweist.

## Claims

1. Cooling circuit for a motor vehicle
1.1 having a cooling medium pump (1), which circulates a cooling medium in the cooling circuit;
1.2 having a hydrodynamic retarder (8), comprising a bladed primary wheel (21) and a bladed secondary wheel (22), which jointly form a working space (23) that can be filled with a working medium, wherein the working medium is the cooling medium; and
1.3 the cooling circuit has a main circuit (2), in which the cooling medium pump (1) and an engine (3) of the motor vehicle or some other unit for cooling by means of the cooling medium, and a heat exchanger (4) for dissipating the heat of the cooling medium absorbed from the engine (3) or from the other unit are positioned; wherein
1.4 the cooling medium pump (1) circulates the cooling medium in the main circuit (2); and
1.5 the hydrodynamic retarder (8) is positioned in a secondary branch (7) of the cooling circuit, comprising a feed (11), which branches off from the main circuit (2) at a branch point (13) and opens into the hydrodynamic retarder (8), and a return (12), which starts from the hydrodynamic retarder (8) and opens into the main circuit (2) at an entry point (14);
**characterized in that**
1.6 the return (12) opens into the main circuit (2) upstream of the branch point (13) of the feed (11), as seen in the direction of flow of the cooling medium in the main circuit (2), but opens on the same side of the cooling medium pump (1), or at the branch point (13) of the feed (11).

2. Cooling circuit according to Claim 1, **characterized in that** the branch point (13) of the feed (11) in the main circuit (2) is free from a valve which deflects the flow into the feed (11), in particular is free from any valve.

3. Cooling circuit according to either of Claims 1 or 2, **characterized in that** the entry point (14) of the return (12) to the main circuit (2) is free from a valve which adjusts the flow in the return (12), in particular is free from any valve.

4. Cooling circuit according to one of Claims 1 to 3, **characterized in that**, at least in the region of the entry point (14) and the branch point (13), the main circuit (2) is formed by a main duct (15), the feed (11) is formed by a feed duct (16), and the return (12) is formed by a return duct (17), and a first axial segment (15.1) of the main duct (15), which is positioned directly upstream of the branch point (13), as seen in the direction of flow of the cooling medium in the main circuit (2), extends parallel to the axial direction of an axial segment of the feed duct (16) which directly adjoins the branch point (13), in particular being aligned with said segment.

5. Cooling circuit according to Claim 4, **characterized in that** a second axial segment (15.2) of the main duct (15), which is positioned directly downstream of the branch point (13), as seen in the direction of flow of the cooling medium in the main circuit (2), surrounds the axial segment of the feed duct (16) in the circumferential direction or is surrounded by said segment in the circumferential direction.

6. Cooling circuit according to Claim 4, **characterized in that** a second axial segment (15.2) of the main duct (15), which is positioned directly downstream of the branch point (13), as seen in the direction of flow of the cooling medium in the main circuit (2), extends parallel to the axial direction of an axial segment of the return duct (17) which directly adjoins the entry point (14), in particular being aligned with said segment.

7. Cooling circuit according to one of Claims 1 to 3, **characterized in that**, at least in the region of the entry point (13) and the branch point (14), the main circuit (2) is formed by a main duct (15), the feed (11) is formed by a feed duct (16), and the return (12) is formed by a return duct (17), and a first axial segment (15.1) of the main duct (15), which is positioned directly upstream of the branch point (13), as seen in the direction of flow of the cooling medium in the main circuit (2), extends parallel to the axial direction of a second axial segment (15.2) of the main duct (15), which is positioned directly downstream of the branch point (13), as seen in the direction of flow of the cooling medium in the main circuit (2), in particular being aligned with said segment.

8. Cooling circuit according to one of Claims 1 to 3 and, in particular, according to Claim 7, **characterized in that** an axial segment of the feed duct (16) which directly adjoins the branch point (13) extends parallel to the axial direction of an axial segment of the return duct (17) which directly adjoins the entry point (14), in particular being aligned with said segment.

9. Cooling circuit according to Claim 8, **characterized in that** the axial segment of the return duct (17) is offset in an axial direction with respect to the axial segment of the feed duct (16), in particular is positioned below or above said segment.

10. Cooling circuit according to one of Claims 7 to 9, **characterized in that** the first axial segment (15.1) and the second axial segment (15.2) of the main duct (15) directly adjoin one another to form a linear flow duct of constant cross section, in particular of circular or elliptical cross section.

11. Cooling circuit according to one of Claims 1 to 10, **characterized in that** the feed (11) and/or the return (12) have a smaller flow cross section than the main circuit (2).

12. Cooling circuit according to one of Claims 1 to 11, **characterized in that** the branch point (13) and the entry point (14) are positioned after the cooling medium pump (1) in the direction of flow of the cooling medium in the main circuit (2).

13. Cooling circuit according to one of Claims 1 to 12, **characterized in that** the branch point (13) and the entry point (14) are positioned ahead of the engine (3) or the other unit in the direction of flow of the cooling medium in the main circuit (2).

14. Cooling circuit according to one of Claims 1 to 13, **characterized in that** the return (12) opens into the main circuit (2) in a pipe stub (18), the outlet end of which projects into the cooling medium flow in the main circuit (2).

15. Cooling circuit according to one of Claims 1 to 14, **characterized in that** a bypass (19) for bypassing the hydrodynamic retarder (8) is provided in the secondary branch (7) of the cooling circuit containing the hydrodynamic retarder (8), said bypass branching off from the feed (11) and opening into the return (12) and, in particular, being free from flow-controlling valves or any valves.

16. Cooling circuit according to one of Claims 1 to 15, **characterized in that** a shut-off valve (9) for selectively opening or shutting off the flow cross section for cooling medium to the hydrodynamic retarder (8) is provided in the feed (11).

17. Cooling circuit according to one of Claims 1 to 16, **characterized in that** a control valve (10) for the variable setting of the flow cross section for cooling medium from the hydrodynamic retarder (8) is provided in the return (12).

18. Cooling circuit according to one of Claims 1 to 17, **characterized in that** the return (12) and the feed (11) are jointly connected to a spiral duct (1.1) of the cooling medium pump (1).

19. Cooling circuit according to one of Claims 1 to 16, **characterized in that** the main circuit (2) has a larger flow cross section at the branch point (13) of the feed (11) than at the entry point (14) of the return (12).

## Revendications

1. Circuit de refroidissement pour un véhicule automobile
1.1 avec une pompe à milieu de refroidissement (1), qui fait circuler un milieu de refroidissement dans le circuit de refroidissement;
1.2 avec un retardateur hydrodynamique (8), comprenant une roue à aubes primaire (21) et une roue à aubes secondaire (22), qui forment ensemble une chambre de travail (23) pouvant être remplie avec un milieu de travail, dans lequel le milieu de travail est le milieu de refroidissement; et
1.3 le circuit de refroidissement présente un circuit principal (2), dans lequel la pompe à milieu de refroidissement (1) et un moteur d'entraînement (3) du véhicule automobile ou un autre groupe pour le refroidissement au moyen du milieu de refroidissement ainsi qu'un échangeur de chaleur (4) pour l'évacuation de la chaleur du milieu de refroidissement communiquée par le moteur d'entraînement (3) ou par l'autre groupe sont positionnés; dans lequel
1.4 la pompe à milieu de refroidissement (1) fait circuler le milieu de refroidissement dans le circuit principal (2); et
1.5 le retardateur hydrodynamique (8) est positionné dans une branche auxiliaire (7) du circuit de refroidissement, comprenant une conduite d'arrivée (11), qui est dérivée du circuit principal (2) en un point de dérivation (13) et qui débouche dans le retardateur hydrodynamique (8), et une conduite de retour (12), qui part du retardateur hydrodynamique (8) et débouche dans le circuit principal (2) à une embouchure (14);
**caractérisé en ce que**
1.6 la conduite de retour (12), considérée dans la direction d'écoulement du milieu de refroidissement dans le circuit principal (2), débouche en amont du point de dérivation (13) de la conduite d'arrivée (11), mais sur le même côté de la pompe à milieu de refroidissement (1), ou débouche au point de dérivation (13) de la conduite d'arrivée (11) dans le circuit principal (2).

2. Circuit de refroidissement selon la revendication 1, **caractérisé en ce que** le point de dérivation (13) de la conduite d'arrivée (11) dans le circuit principal (2) est libre d'une soupape déviant l'écoulement dans la conduite d'arrivée (11), en particulier est libre de toute autre soupape.

3. Circuit de refroidissement selon une des revendications 1 ou 2, **caractérisé en ce que** l'embouchure (14) de la conduite de retour (12) dans le circuit principal (2) est libre d'une soupape réglant l'écoulement dans la conduite de retour (12), en particulier est libre de toute autre soupape.

4. Circuit de refroidissement selon l'une quelconque des revendications 1 à 3, **caractérisé en ce qu'**au moins dans la région de l'embouchure (14) et du point de dérivation (13), le circuit principal (2) est formé par un canal principal (15), la conduite d'arrivée (11) par un canal d'arrivée (16) et la conduite de retour (12) par un canal de retour (17) et une première partie axiale (15.1) du canal principal (15), qui, considérée dans la direction d'écoulement du milieu de refroidissement dans le circuit principal (2), est positionnée immédiatement en amont du point de dérivation (13), et court parallèlement à la direction axiale d'une partie axiale du canal d'arrivée (16), qui se raccorde directement au point de dérivation (13), en particulier est alignée avec celle-ci.

5. Circuit de refroidissement selon la revendication 4, **caractérisé en ce qu'**une deuxième partie axiale (15.2) du canal principal (15), qui, considérée dans la direction d'écoulement du milieu de refroidissement dans le circuit principal (2), est positionnée immédiatement en aval du point de dérivation (13), entoure en direction périphérique la partie axiale du canal d'arrivée (16) ou est entourée par celle-ci en direction périphérique.

6. Circuit de refroidissement selon la revendication 4, **caractérisé en ce qu'**une deuxième partie axiale (15.2) du canal principal (15), qui, considérée dans la direction d'écoulement du milieu de refroidissement dans le circuit principal (2), est positionnée immédiatement en aval du point de dérivation (13), et court parallèlement à la direction axiale d'une partie axiale du canal de retour (17), qui se raccorde directement à l'embouchure (14), en particulier est alignée avec celle-ci.

7. Circuit de refroidissement selon l'une quelconque des revendications 1 à 3, **caractérisé en ce qu'**au moins dans la région de l'embouchure (13) et du point de dérivation (14), le circuit principal (2) est formé par un canal principal (15), la conduite d'arrivée (11) par un canal d'arrivée (16) et la conduite de retour (12) par un canal de retour (17), et une première partie axiale (15.1) du canal principal (15), qui, considérée dans la direction d'écoulement du milieu de refroidissement dans le circuit principal (2), est positionnée immédiatement en amont du point de dérivation (13), et court parallèlement à la direction axiale d'une deuxième partie axiale (15.2) du canal principal (15), qui, considérée dans la direction d'écoulement du milieu de refroidissement dans le circuit principal (2), est positionnée immédiatement en aval du point de dérivation (13), en particulier est alignée avec celle-ci.

8. Circuit de refroidissement selon l'une quelconque des revendications 1 à 3, et en particulier selon la revendication 7, **caractérisé en ce qu'**une partie axiale du canal d'arrivée (16), qui se raccorde directement au point de dérivation (13), court parallèlement à la direction axiale d'une partie axiale du canal de retour (17), qui se raccorde directement à l'embouchure (14), en particulier est alignée avec celle-ci.

9. Circuit de refroidissement selon la revendication 8, **caractérisé en ce que** la partie axiale du canal de retour (17) est décalée en direction axiale par rapport à la partie axiale du canal d'arrivée (16), en particulier est positionnée en dessous ou au-dessus de celle-ci.

10. Circuit de refroidissement selon l'une quelconque des revendications 7 à 9, **caractérisé en ce que** la première partie axiale (15.1) et la deuxième partie axiale (15.2) du canal principal (15) forment en se raccordant directement l'une à l'autre un canal d'écoulement linéaire de même section transversale, en particulier avec une section transversale circulaire ou elliptique.

11. Circuit de refroidissement selon l'une quelconque des revendications 1 à 10, **caractérisé en ce que** la conduite d'arrivée (11) et/ou la conduite de retour (12) présentent une section transversale d'écoulement plus petite que le circuit principal (2).

12. Circuit de refroidissement selon l'une quelconque des revendications 1 à 11, **caractérisé en ce que** le point de dérivation (13) et l'embouchure (14) sont positionnés après la pompe à milieu de refroidissement (1) dans la direction d'écoulement du milieu de refroidissement dans le circuit principal (2).

13. Circuit de refroidissement selon l'une quelconque des revendications 1 à 12, **caractérisé en ce que** le point de dérivation (13) et l'embouchure (14) sont disposés avant le moteur d'entraînement (3) ou l'autre groupe dans la direction d'écoulement du milieu de refroidissement dans le circuit principal (2).

14. Circuit de refroidissement selon l'une quelconque des revendications 1 à 13, **caractérisé en ce que** la conduite de retour (12) débouche dans le circuit principal (2) dans un embout tubulaire (18), dont l'extrémité de sortie plonge dans l'écoulement de milieu de refroidissement dans le circuit principal (2).

15. Circuit de refroidissement selon l'une quelconque des revendications 1 à 14, **caractérisé en ce qu'**il est prévu dans la branche auxiliaire (7) du circuit de refroidissement avec le retardateur hydrodynamique (8) une dérivation (19) pour contourner le retardateur hydrodynamique (8), qui part de la conduite d'arrivée (11) et débouche dans la conduite de retour (12) et en particulier est libre de soupapes réglant l'écoulement ou de toutes autres soupapes.

16. Circuit de refroidissement selon l'une quelconque des revendications 1 à 15, **caractérisé en ce qu'**il est prévu dans la conduite d'arrivée (11) une soupape de coupure (9) pour la libération ou la fermeture sélective de la section transversale d'écoulement pour le milieu de refroidissement vers le retardateur hydrodynamique (8).

17. Circuit de refroidissement selon l'une quelconque des revendications 1 à 16, **caractérisé en ce qu'**il est prévu dans la conduite de retour (12) une soupape de commande (10) pour le réglage variable de la section transversale d'écoulement pour le milieu de refroidissement à partir du retardateur hydrodynamique (8).

18. Circuit de refroidissement selon l'une quelconque des revendications 1 à 17, **caractérisé en ce que** la conduite de retour (12) et la conduite d'arrivée (11) sont raccordées ensemble à un canal hélicoïdal (1.1) de la pompe à milieu de refroidissement (1).

19. Circuit de refroidissement selon l'une quelconque des revendications 1 à 16, **caractérisé en ce que** le circuit principal (2) présente au point de dérivation (13) de la conduite d'arrivée (11) une section transversale d'écoulement plus grande qu'à l'embouchure (14) de la conduite de retour (12).
